# EUROPEAN PATENT SPECIFICATION

(11) **EP 4 160 885 B1**
(45) Date of publication and mention of the grant of the patent: **20.08.2025**
(21) Application number: 21200665.4
(22) Date of filing: 04.10.2021
(51) Int. Cl.: H02K 15/00

(54) **ROTORS FOR ELECTRICAL MACHINES**
ROTOREN FÜR ELEKTRISCHE MASCHINEN
ROTORS POUR MACHINES ÉLECTRIQUES

(43) Date of publication of application: 05.04.2023
(73) Proprietor: GE Energy Power Conversion Technology Ltd, Rugby, Warwickshire CV21 1BD (GB)
(72) Inventor: HAGUE, Michael, RUGBY, CV21 1BD (GB); PATEL, Vipulkumar, RUGBY, CV21 1BD (GB); ANBARASU, Ramasamy, RUGBY, CV21 1BU (GB)
(74) Representative: Serjeants LLP

(56) References cited:
- EP-A1- 3 618 235
- EP-A1- 3 637 587
- WO-A2-2006/032969
- WO-A2-2014/016804

## Description

### Technical Field

The present invention relates to rotors for rotating electrical machines, e.g., motors and generators.

### Background Art

Electrical machines that use permanent magnet rotors are well known. If there is a fault in one of the stator coils of the electrical machine, it can be difficult to affect a repair because of the limited access that is available, and the strong magnetic fields that are constantly generated by the permanent magnets.

WO 2014/016804 discloses a rotor for an electrical machine according to the preamble of claim 1.

WO 2006/032969 also discloses a rotor with removable rotor segments.

### Summary of the invention

The present invention aims to address the problem of access and provides a rotor for an electrical machine (e.g., a motor or generator), comprising:
a rotor body; and
a plurality of rotor segments arranged circumferentially around the rotor body and connected thereto, wherein each rotor segment includes a mounting surface that defines part of a radially inner or outer surface of the rotor;
wherein each rotor segment includes one or more permanent magnet modules mounted to the mounting surface to define an array of permanent magnet modules arranged circumferentially around the radially inner or outer surface of the rotor;
wherein one of the plurality of rotor segments is removably connected to the rotor body (the "removable rotor segment") and the one or more permanent magnet modules that are mounted to its mounting surface are removably mounted;
characterised in that the mounting surface of the rotor segment that is removably connected to the rotor body has an arc length that is less than the arc length of the mounting surface of the majority of the remaining rotor segments; and
the rotor segment that is removably mounted to the rotor body has fewer permanent magnet modules mounted to its mounting surface than the majority of the remaining rotor segments.

It will be readily understood that by "removably connected" and "removably mounted" it is meant that the removable rotor segment and the one or more permanent magnet modules that are mounted to its mounting surface are deliberately configured in such a way that neither they nor any other part of the rotor is damaged during the removal process, and that permits the removable rotor segment and the one or more permanent magnet modules to be respectively reconnected to the rotor body and remounted to the removable rotor segment. As described in more detail below, the removable rotor segment can be removably connected to the rotor body, and the one or more permanent magnet modules can be removably mounted to the mounting surface of the removable rotor segment, using mechanical fixings, e.g., one or more bolts or screws, that can be untightened and tightened (or released and fastened) using suitable tooling and without causing any damage.

The rotor segments are preferably arranged so that their respective mounting surfaces are substantially abutting in the circumferential direction so as to define a substantially cylindrical mounting surface of the rotor on which the array of permanent magnet modules are arranged. If the rotor is designed to be located radially within a stator of the electrical machine, the mounting surfaces of the rotor segments define a radially outer mounting surface of the rotor that is separated from a radially inner surface of the stator by an air gap. Alternatively, if the rotor is designed to be located radially outside a stator of the electrical machine, the mounting surfaces of the rotor segments define a radially inner mounting surface of the rotor that is separated from a radially outer surface of the stator by an air gap. The array of permanent magnet modules are arranged circumferentially around the radially outer or radially inner mounting surface of the rotor to define a plurality of rotor poles of alternating polarity.

The rotor is particularly suitable for use in physically large rotating electrical machines that have a large diameter.

In one arrangement, the rotor can be part of a gearless mill drive motor, which motors normally have a large diameter. In a gearless mill drive motor, the mill drum is an integral part of the rotor body to which the rotor segments are connected.

For ease of assembly, all of the rotor segments can be removably connected to the rotor body using mechanical fixings, e.g., one or more bolts or screws. But the removable rotor segment is specifically designed to be removed from the rotor body during repair or servicing of the electrical machine with minimal effort. Each rotor segment can have a L-shaped, T-shaped or U-shaped profile with a mounting plate that defines the mounting surface of the rotor segment, and at least one substantially perpendicular securing plate that extends radially from the mounting plate and is connected to the rotor body. Each securing plate and the rotor body can include a plurality of aligned openings for receiving the mechanical fixings. It will be readily understood that other rotor segment constructions are possible. In particular, the profile of each rotor segment might depend on the axial length of the rotor. It will also be readily understood that other ways of connecting the rotor segments to the rotor body are possible.

The rotor segments can be made of a suitable metal such as steel.

The mounting surface of each rotor segment will have an arc length (i.e., its dimension in the circumferential direction) and an axial length (i.e., its dimension in the axial direction).

The mounting surface of the removable rotor segment can have an arc length A, the mounting surface of another one of the rotor segments can have an arc length B, and the mounting surface of each of the remaining rotor segments can have an arc length C, where arc length A plus arc length B equals arc length C. The arc length A and the arc length B can be equal or not equal.

Conveniently, the arc length A can be the arc length C divided by an integer.

The rotor segment that has the arc length B can be circumferentially adjacent to the removable rotor segment (the "adjacent rotor segment"). But in some arrangements, the rotor segment that has the arc length B can be separated from the removable rotor segment by one or more rotor segments, and can even be arranged diametrically opposite the removable rotor segment.

The removable rotor segment can have N permanent magnet modules mounted to its mounting surface, another one of the rotor segments (e.g., the adjacent rotor segment) can have P permanent magnet modules mounted to its mounting surface, and each of the remaining rotor segments can have Q permanent magnet modules mounted to its mounting surface, where N plus P equals Q. N and P can be equal or not equal.

The rotor can have any suitable number of rotor segments, and each rotor segment can have any suitable number of permanent magnet modules on its mounting surface.

One particular rotor includes sixteen rotor segments - i.e., the removable rotor segment, the adjacent rotor segment and fourteen other rotor segments - circumferentially arranged around the rotor body. The removable rotor segment and the adjacent rotor segment have an arc length that is about half the arc length of each of the remaining rotor segments. The removable rotor segment and the adjacent rotor segment have four rotor poles, where each rotor pole is defined by one or more permanent magnet modules arranged end-to-end so as to be axially aligned and mounted to their respective mounting surfaces (i.e., N and P are four, eight, twelve etc.), and each of the remaining rotor segments has eight rotor poles, where each rotor pole is defined by one or more permanent magnet modules arranged end-to-end so as to be axially aligned and mounted to their respective mounting surfaces (i.e., Q is eight, sixteen, twenty-four etc.). The rotor therefore includes a total of one hundred and twenty rotor poles. But it will be readily understood that the rotor can have any suitable number of rotor poles, divided between any suitable number of rotor segments.

If each rotor segment includes a plurality of permanent magnet modules, the permanent magnet modules can be mounted to the mounting surface of the respective rotor segment with substantially equal spacing in the circumferential direction. Alternatively, the permanent magnet modules can be mounted to the mounting surface of the respective rotor segment with unequal spacing in the circumferential direction, e.g., to help reduce the cogging torque.

Although in practice, the permanent magnet modules that are mounted to the rotor segments apart from the removable rotor segment can be fixedly or permanently mounted, it will often be preferred for ease of assembly that all of the permanent magnet modules are removably mounted to the mounting surface of the respective rotor segment. Each permanent magnet module can comprise a carrier that is mounted to the mounting surface of the respective rotor segment. Each carrier can be mounted directly to the mounting surface of the respective rotor segment, or indirectly by means of a mounting block - see below. Each mounting block can be used to mount one or more carriers arranged end-to-end so that the permanent magnet modules are axially aligned and define a single rotor pole of the same polarity. The carriers extend axially along the mounting surface and can be made of a suitable magnet material. One or more pole pieces made of permanent magnet material are mounted or located on a surface (e.g., a radially inner or radially outer surface) of the carrier. The surface of the carrier can include a recess or groove for receiving and locating the pole pieces.

Each permanent magnet module can further comprise an inverted U-shaped pole piece retainer. Each pole piece retainer is arranged over the one or more pole pieces and can be secured to the respective carrier. Each pole piece retainer can be made of a suitable non-magnetic material.

Each carrier can be removably mounted to the mounting surface of the respective rotor segment using mechanical fixings, e.g., one or more bolts or screws. The mechanical fixings can be spaced apart in the axial direction. Each mechanical fixing can be received in aligned openings in the mounting surface of the rotor segment (e.g., through the mounting plate) and a facing mounting surface of the carrier. It will be readily understood that other ways of mounting each carrier to the mounting surface of the respective rotor segment are possible, e.g., slots, keyways or dovetails.

A mounting block can be positioned radially between each permanent magnet module and the mounting surface of the respective rotor segment. The mounting block can include a mounting surface that is positioned adjacent the mounting surface of the respective rotor segment. One or both of the facing mounting surfaces can include locating features for properly locating the mounting block on the rotor segment, e.g., to ensure that each mounting block is axially aligned along the rotor segment. An opposite surface of the mounting block (e.g., a radially inner or outer supporting surface) can include a recess or groove for receiving and locating the carrier of a permanent magnet module. Each mounting block can receive and locate one permanent magnet module, or two or more permanent magnet modules arranged end-to-end and axially aligned to define a single rotor pole. The mounting blocks therefore space the permanent magnet modules radially away from the mounting surface of the respective rotor segment. The permanent magnet modules can be manufactured as a standard component and the mounting blocks can then be used to adjust the height of the permanent magnet modules relative to the mounting surface in order to achieve a desired air gap between the permanent magnet modules and the stator. The height or spacing can be adjusted by machining the recess or groove of the mounting block to a particular depth. The mounting blocks can be mounted to the mounting surface of the respective rotor segment using the same mechanical fixings (e.g., bolts or screws) that are used to mount the permanent magnet modules. Each mechanical fixing can be received in aligned openings in the mounting surface, the carrier and the respective mounting block. It will be readily understood that other ways of connecting each mounting block to the mounting surface of the respective rotor segment are possible.

A permanent magnet module that is capable of being removably mounted to a mounting surface of a rotor segment is described further in EP 1860755.

To assemble the rotor, the one or more permanent magnet modules can be mounted to the mounting surface of each respective rotor segment, optionally using mounting blocks. A pre-assembled component comprising an individual rotor segment with one or more permanent magnet modules mounted to its mounting surface can be packaged and transported to site before being connected to the rotor body.

The present invention further provides an electrical machine (e.g., a motor or generator) comprising a rotor as described above and a stator comprising a stator winding with a plurality of stator coils arranged circumferentially around the stator. The stator coils can be located in stator slots formed in the radially inner or outer surface of the stator. In one arrangement, the stator winding can be a single-layer stator winding with two or more tiers, e.g., a multi-tier stator winding. In a single-layer multi-tier stator winding, the endwindings of the stator coils forming the inner tier or tiers are bent away from the axis of the stator so that they may pass over the stator coils forming the outer tier or tiers. The endwindings of the stator coils forming the outermost tier do not need to pass over other stator coils and can be substantially parallel to the axis of the stator.

If the electrical machine needs to be repaired or serviced, the removable rotor segment can be used to provide access to one or more of the stator coils. Such repair or servicing is not possible through the air gap between the rotor and the stator. Removing the rotor segment from the rotor body creates a gap that an engineer can use to gain access to the stator surface so that one or more of the stator coils can be inspected, repaired or removed. Before the rotor segment can be removed from the rotor body, all of the permanent magnet modules that are mounted to its mounting surface must first be removed. The present invention further provides a method of repairing or servicing an electrical machine according to claim 13.

In some methods, the rotor is rotated relative to the stator until the removable rotor segment is aligned with an access panel (e.g., in the stator frame) that permits access to the rotor so that the permanent magnet modules and the removable rotor segment can be removed. After the removable rotor segment has been removed, the rotor can then be rotated relative to the stator so that the gap is substantially aligned with the one or more adjacent stator coils. In some methods, where the permanent magnet modules and the removable rotor segment can be removed without the need for alignment with an access panel, the rotor can be rotated relative to the stator either before or after the permanent magnet modules and the removable rotor segment have been removed.

The permanent magnet modules and the removable rotor segment can be removed using suitable tooling. If the permanent magnet modules are mounted to the removable rotor segment using mounting blocks, then depending on the site conditions, the mounting blocks can either be left on the rotor segment and removed along with it, or they can be removed before the removable rotor segment is removed from the rotor body.

Because the arc length of the mounting surface of the removable rotor segment is less than the arc length of the majority of the other rotor segments, and the removable rotor segment has fewer permanent magnet modules mounted to its mounting surface, it is much easier to carry out a repair if there is a fault in one or more of the stator coils. For example, in the case of the particular rotor described above, it is only necessary to remove half the number of permanent magnet modules before the removable rotor segment can be removed. In general terms, the arc length of the mounting surface of the removable rotor segment can be selected to provide a gap in the radially inner or outer surface of the rotor that is just large enough to allow the necessary engineer access for repairing or removing one or more of the stator coils. This means that the minimum number of permanent magnet modules need to be removed.

The rows of permanent magnet modules are normally removed from the mounting surface of the removable rotor segment in a particular sequence, for example removed one-by-one in a clockwise or anti-clockwise order.

To minimise any magnetic imbalance within the electrical machine, the method preferably further comprises sequentially removing at least some of the permanent magnet modules from the mounting surface of a rotor segment that is substantially diametrically opposite the removable rotor segment. In this case, these permanent magnet modules will also need to be removably mounted to the mounting surface even if the rest of the permanent magnet modules are fixedly or permanently mounted. A second access panel may also be provided (e.g., in the stator frame) to allow the permanent magnets to be removed from the opposite rotor segment. The second access panel can be arranged substantially diametrically opposite the first access panel. Normally the same number of permanent magnet modules will be removed from both the removable rotor segment and the opposite rotor segment. For example, in the case of the particular rotor described above, only the permanent magnet modules that define four of the eight rotor poles would be removed from the opposite rotor segment. Permanent magnet modules are normally removed alternately from each rotor segment - e.g., the one or more permanent magnet modules defining a first rotor pole would be removed from the removable rotor segment, the one or more permanent magnet modules defining a first rotor pole would be removed from the opposite rotor segment, the one or more permanent magnet modules defining a second rotor pole would be removed from the removable rotor segment, the one or more permanent magnet modules defining a second rotor pole would be removed from the opposite rotor segment, and so on until all of the permanent magnet modules have been removed from the removable rotor segment and the corresponding number of permanent magnet modules have been removed from the opposite rotor segment.

Only after all of the permanent magnet modules have been removed from the mounting surface of the removable rotor segment can the rotor segment itself be safely removed from the rotor body - e.g., by removing the bolts, screws or other mechanical fixings that connect the rotor segment to the rotor body.

If one or more stator coils are removed, one or more replacement stator coils can be inserted into the stator through the gap that is created by the removal of the removable rotor segment. The removable rotor segment can then be reconnected to the rotor body and the previously removed permanent magnet modules can be sequentially remounted to the mounting surface of the removable rotor segment (and preferably to the mounting surface of the opposite rotor segment). The stator coils can be constructed to facilitate their removal from the stator slots and to facilitate the insertion of replacements into the empty stator slots. For example, each stator coil can be inserted into a pair of parallel stator slots. In other words, the stator slots that receive each coil are not oriented along a radius of the stator, but instead are substantially parallel to each other in the radial direction.

### Drawings

Figure 1 is an end view of an electrical machine according to the present invention;
Figure 2 is an end view of one of the rotor segments of the rotor of the electrical machine shown in Figure 1;
Figure 3 is an end view of a removable rotor segment and an adjacent rotor segment of the rotor of the electrical machine shown in Figure 1;
Figure 4 is a cross section view of the rotor of the electrical machine shown in Figure 1 and showing a side view of one of the rotor segments;
Figure 5 is a top view of a permanent magnet module;
Figure 6 is a cross section view of the permanent magnet module through line A-A of Figure 5;
Figure 7 is a cross section view of the permanent magnet module through line B-B of Figure 5;
Figure 8 is a top view of a mounting block;
Figure 9 is an end view of the mounting block of Figure 8;
Figure 10 is an end view of the mounting block of Figure 8 after the mounting block has been machined to form a recess or groove for receiving and locating one or more permanent magnet modules; and
Figures 11 to 16 show a method of repairing or servicing the electrical machine shown in Figure 1.

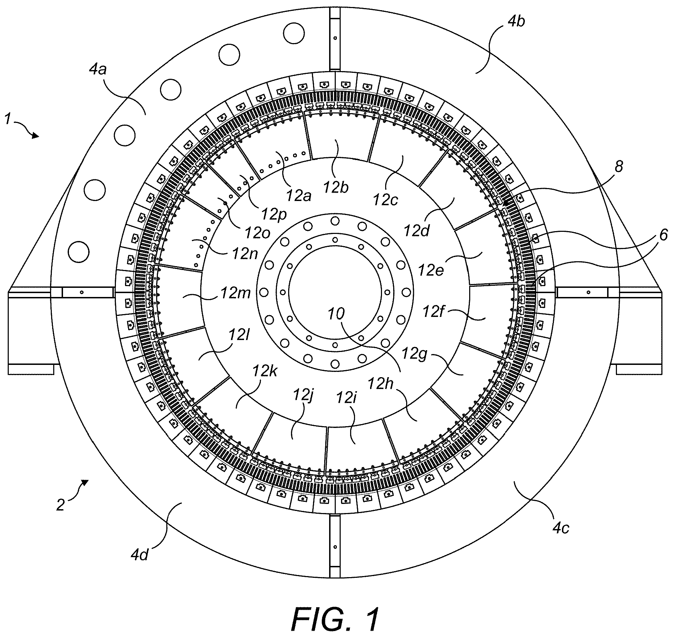

Figure 1 shows an end view of an electrical machine 1 according to the present invention. The electrical machine 1 includes a segmented stator 2 with four stator segments 4a, 4b, ..., 4d defining a stator core with a plurality of stator slots 6 in its radially inner surface. A stator winding (not shown) includes a plurality of stator coils. Each stator coil is received in a pair of stator slots 6 to define a single-layer three-tier stator winding.

A rotor 8 is located radially inside the stator 2. Although the following description relates to an electrical machine where the rotor is located radially inside the stator, it will be readily understood that the rotor can be located radially outside the stator such that the rotor segments are arranged circumferentially around a radially inner part of the rotor body and the permanent magnet modules are arranged circumferentially around a radially inner cylindrical mounting surface of the rotor.

The rotor 8 includes a rotor body 10. A total of sixteen rotor segments 12a, 12b, ..., 12p are arranged circumferentially around a radially outer part of the rotor body 10.

Fourteen of the rotor segments 12a, 12b, ..., 12n have the same construction. For ease, the rotor segments 12a, 12b, ..., 12n having the same construction are referred to below as "standard" rotor segments. The remaining two rotor segments include a removable rotor segment 12o and an adjacent rotor segment 12p.

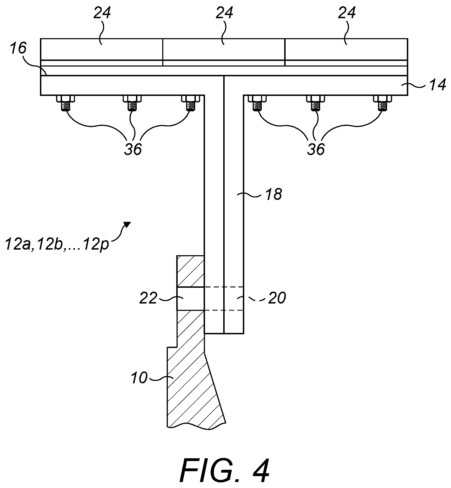

As shown most clearly in Figure 4, each rotor segment has a T-shaped profile in cross section with a mounting plate 14 that defines a radially outer mounting surface 16. The rotor segments can have other profiles, e.g., an L-shaped or U-shaped profile. A securing plate 18 is perpendicular to the mounting plate 14 and extends radially inwardly. The securing plate 18 includes a plurality of circumferentially spaced openings 20 that are aligned with corresponding openings 22 in a radially outer part of the rotor body 10. Each rotor segment 12 is removably connected to the rotor body 10 by passing bolts (not shown) through the aligned openings 20, 22 in the rotor segment and the rotor body.

When each rotor segment 12 is connected to the rotor body 10, the mounting plates 14 are substantially abutting in the circumferential direction so as to define a substantially radially outer cylindrical mounting surface of the rotor 8. The radially outer cylindrical mounting surface is formed by the combination of the individual mounting surfaces 16 of the rotor segments 12a, 12b, ..., 12p, each of which has an arc length.

As described in more detail below, an array of permanent magnet modules 24 are arranged circumferentially around the radially outer cylindrical mounting surface of the rotor. The permanent magnet modules 24 define one hundred and twenty rotor poles of alternating polarity.

The mounting plate 14 of each standard rotor segment 12a, 12b, ..., 12n has an arc length (i.e., its dimension in the circumferential direction) and an axial length (i.e., its dimension in the axial direction). The mounting plate 14 of the removable rotor segment 12o has an arc length that is substantially half the arc length of the mounting plates of the standard rotor segments 12a, 12b, ..., 12n. The mounting plate 14 of the adjacent rotor segment 12p also has an arc length that is substantially half the arc length of the mounting plates of the standard rotor segments 12a, 12b, ..., 12n. Together the mounting plates 14 of the removable rotor segment 12o and the adjacent rotor segment 12p have substantially the same arc length as the mounting plate of one of the standard rotor segments 12a, 12b, ..., 12n.

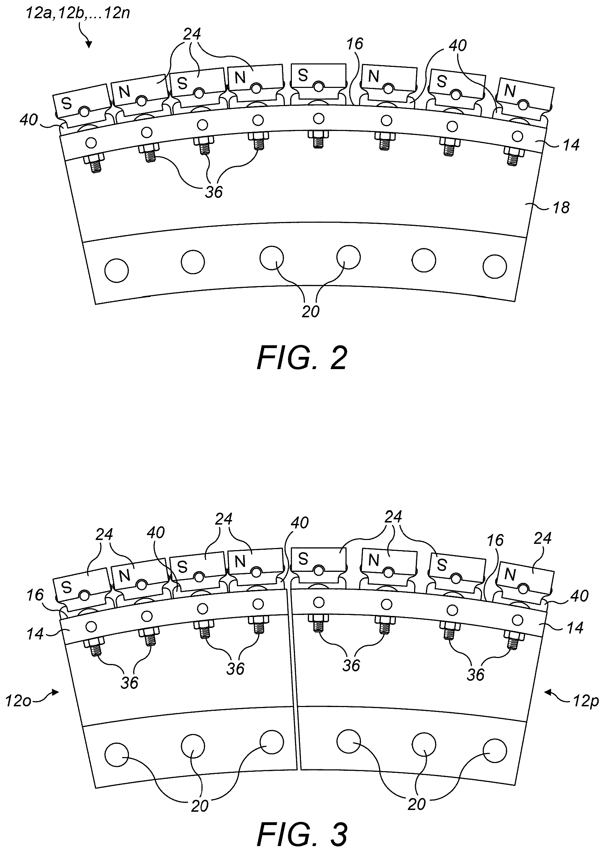

As shown in Figures 2 and 4, a total of twenty-four permanent magnet modules 24 are mounted to the mounting surface 16 of each of the fourteen standard rotor segments 12a, 12b, ..., 12n. In particular, each rotor pole is defined by three permanent magnet modules 24 arranged end-to-end so that they extend axially along the mounting plate 14 of the rotor segment. Each standard rotor segment 12a, 12b, ..., 12n has eight rotor poles.

As shown in Figures 3 and 4, a total of twelve permanent magnet modules 24 are mounted to the mounting surface 16 of the removable rotor segment 12o, and a total of twelve permanent magnet modules are mounted to the mounting surface of the adjacent rotor segment 12p. In particular, each rotor pole is defined by three permanent magnet modules 24 arranged end-to-end so that they extend axially along the mounting plate 14 of the respective rotor segment. The removable rotor segment 12o has four rotor poles and the adjacent rotor segment 12p has four rotor poles.

The permanent magnet modules 24 are mounted such that the rotor poles have an unequal spacing in the circumferential direction, e.g., to help reduce the cogging torque.

Each permanent magnet module 24 is removably mounted to the mounting plate 14 of the respective rotor segment.

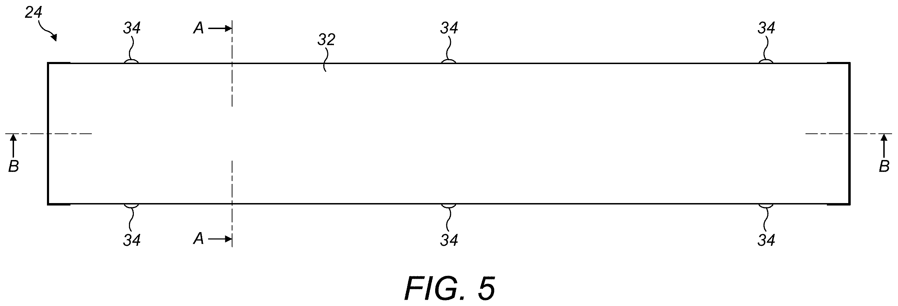

As shown in Figures 5 to 7, each permanent magnet module 24 includes a carrier 26 that is indirectly mounted to the mounting surface of the respective rotor segment by a mounting block 40 described in more detail below. Alternatively, the carrier of each permanent magnet module can be directly mounted to the mounting surface without using a mounting block.

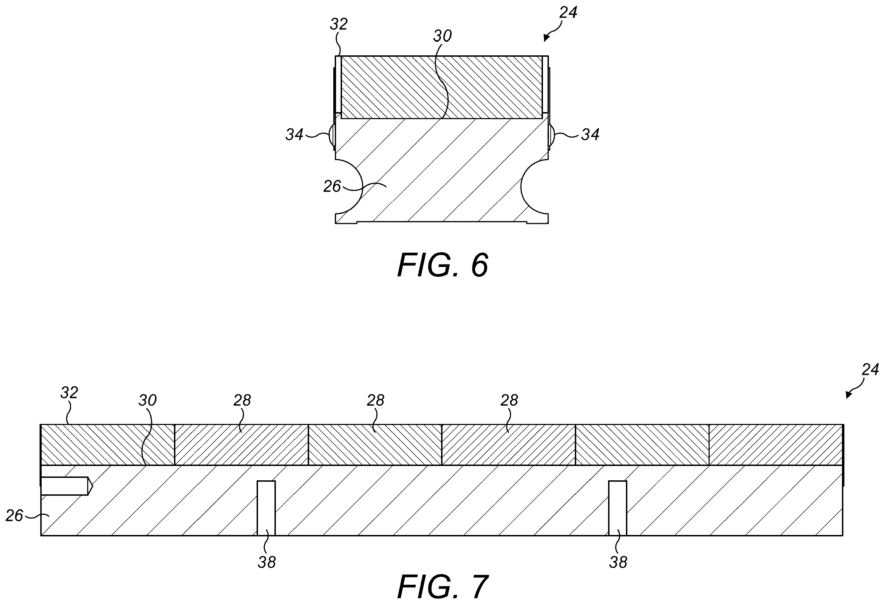

Each carrier 26 extends axially along the mounting surface and is made of a suitable magnet material. A plurality of pole pieces 28 made of permanent magnet material are mounted or located on a radially outer surface 30 of each carrier. The surface 30 of each carrier 26 includes a recess or groove for receiving and locating the pole pieces 28 (see Figure 6).

Each permanent magnet module 24 also includes an inverted U-shaped pole piece retainer 32. Each pole piece retainer 32 is arranged over the pole pieces 28 and secured to the sides of the respective carrier 26 by mechanical fixings, e.g., screws 34. Each pole piece retainer 32 is made of a suitable non-magnetic material.

Each carrier 26 is removably mounted to the mounting plate 14 of the respective rotor segment using mechanical fixings, e.g., one or more bolts 36 (Figure 4). The bolts 36 are spaced apart in the axial direction and are received in aligned openings in the mounting surface and carrier. Figure 7 shows two openings 38 in the lower surface of the carrier 26 for receiving bolts 36.

The carriers 26 are mounted to the mounting plate 14 of each rotor segment using mounting blocks 40.

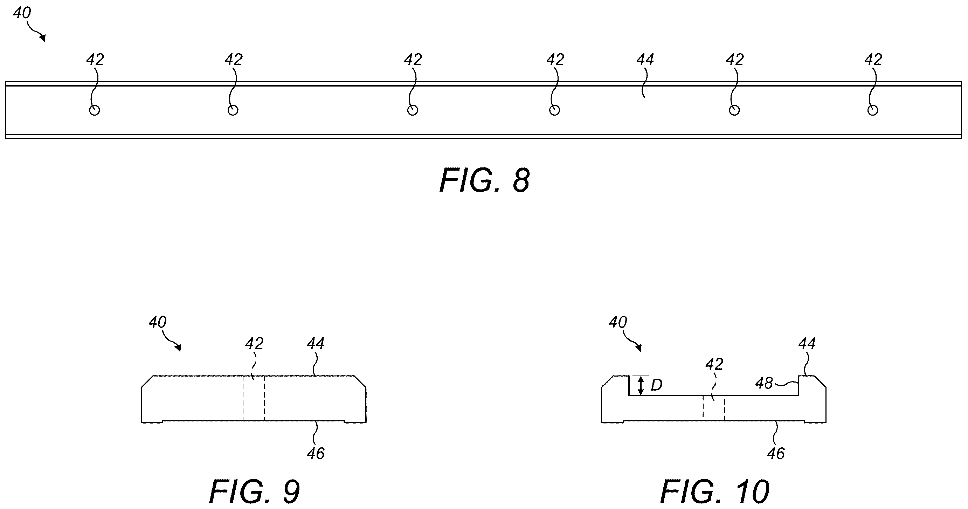

A mounting block 40 is shown in Figures 8 to 10. Each mounting block 40 can receive and locate three permanent magnet modules 24 arranged end-to-end.

Figures 8 and 9 show a mounting block 40 before it has been machined. Each mounting block 40 includes six openings 42 which are aligned with the openings 38 in the lower surface of each carrier 26 when three carriers are received and located in a recess or groove in the upper surface 44 (or supporting surface) of the mounting block. The lower surface 46 of each mounting block 40 defines a mounting surface and includes a locating feature (e.g., a shallow recess shown in Figure 9) for locating the mounting block on the mounting surface 16 of the rotor segment.

Figure 10 shows the mounting block 40 after the recess or groove 48 has been machined in the upper surface 44.

The mounting blocks 40 space the permanent magnet modules 24 away from the mounting surface 16 of the rotor segments. The permanent magnet modules 24 can therefore be manufactured as a standard component with standard dimensions and the mounting blocks 40 can be used to adjust the height of the permanent magnet modules relative to the mounting surface 16 in order to achieve a desired air gap between the permanent magnet modules and the stator. The spacing is adjusted by machining the recess or groove 48 to have a particular depth D.

The bolts 36 pass through the aligned openings in the mounting plate 14, the mounting block 40 and are received in the openings 36 in each carrier 26 to removably secure the mounting block and each carrier to the mounting plate.

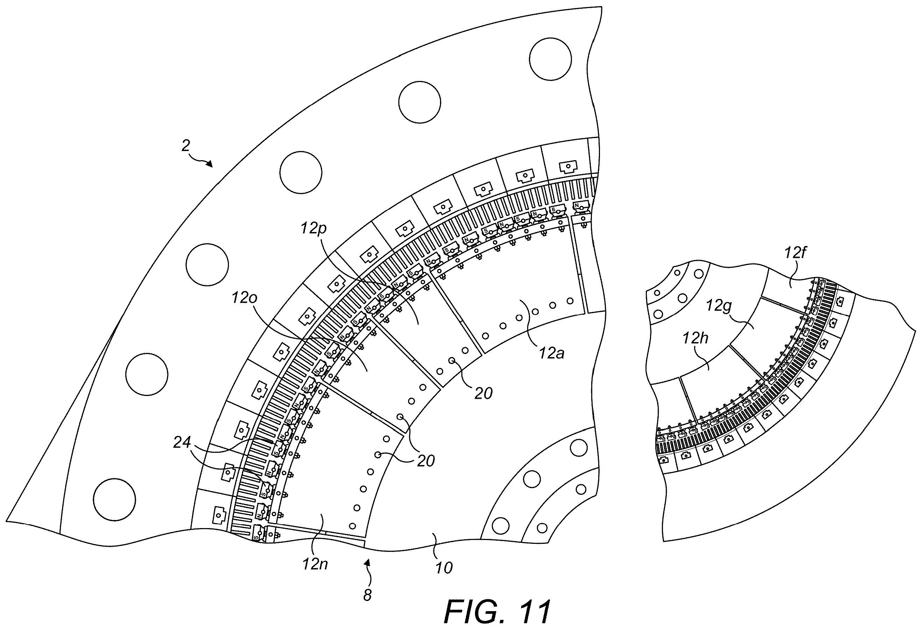

A method of repairing the electrical machine will now be described with reference to Figures 11 to 16.

It will be assumed that the rotor has already been rotated relative to the stator such that the removable rotor segment 12o is substantially aligned with one or more stator coils that need to be repaired or replaced - it will be readily understood that the stator coils are not shown for clarity, but each stator coil would be received in a pair of stator slots - and with a first access panel in the stator frame that permits the permanent magnet modules 24 on the removable rotor segment 12o to be removed using suitable tooling. It will also be assumed that the rotor segment 12g that is diametrically opposite the removable rotor segment 12o is aligned with a second access panel in the stator frame that permits the permanent magnet modules 24 on the opposite rotor segment 12g to be removed using suitable tooling.

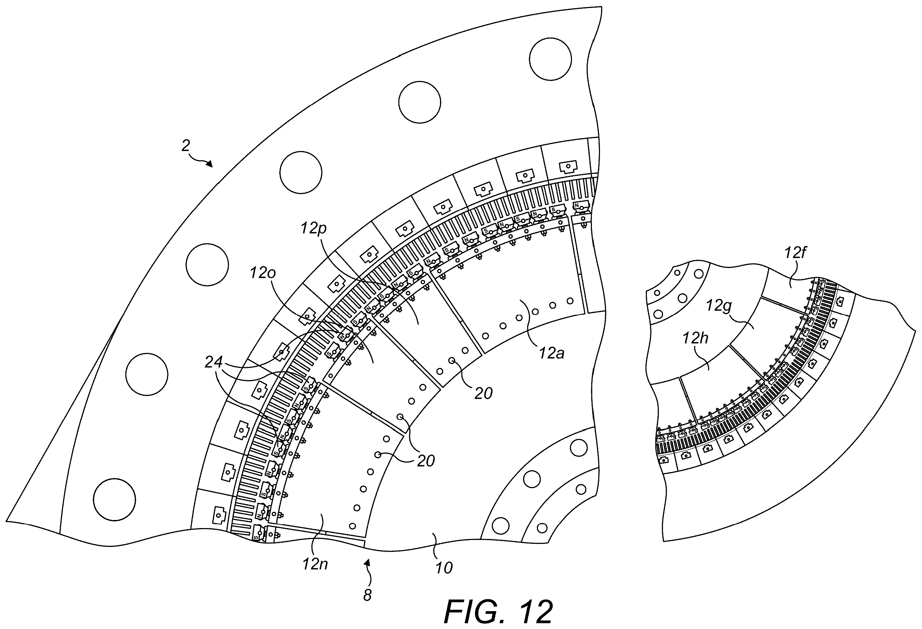

Figures 12 to 14 show how the permanent magnet modules 24 mounted to the mounting plate 14 of the removable rotor segment 12o are removed one row at a time. The permanent magnets modules 24 are removed one-by-one in a clockwise order. In practice, the bolts 36 that hold the carriers 24 and the mounting blocks 40 to the mounting plate 14 are removed and then the permanent magnet modules 24 and the mounting blocks 40 can be carefully extracted through the first access panel. Twelve of the twenty-four permanent magnet modules 22 mounted to the mounting plate 14 of the rotor segment 12g that is diametrically opposite the removable rotor segment 12o are also removed, along with the respective mounting blocks 40, through the second access panel.

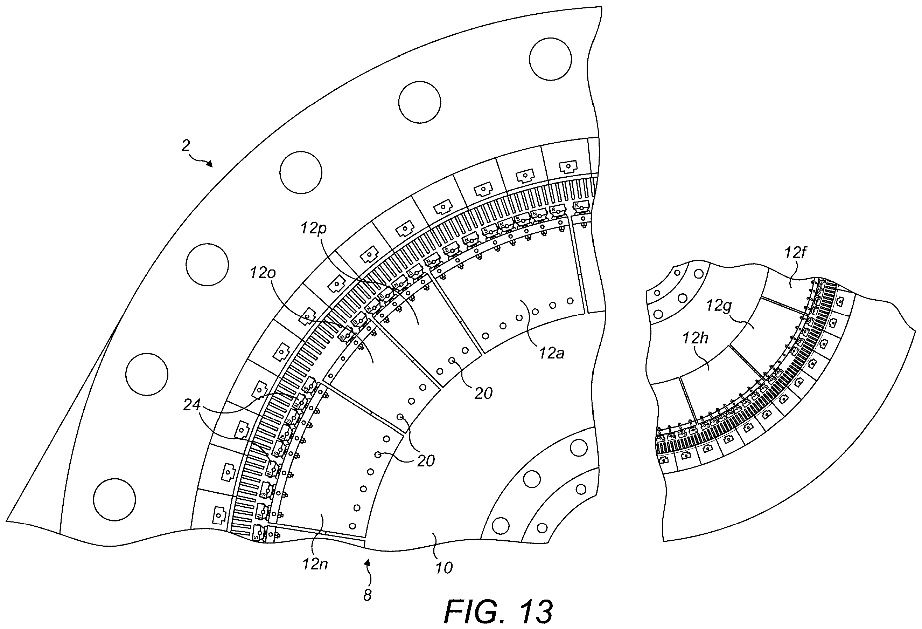

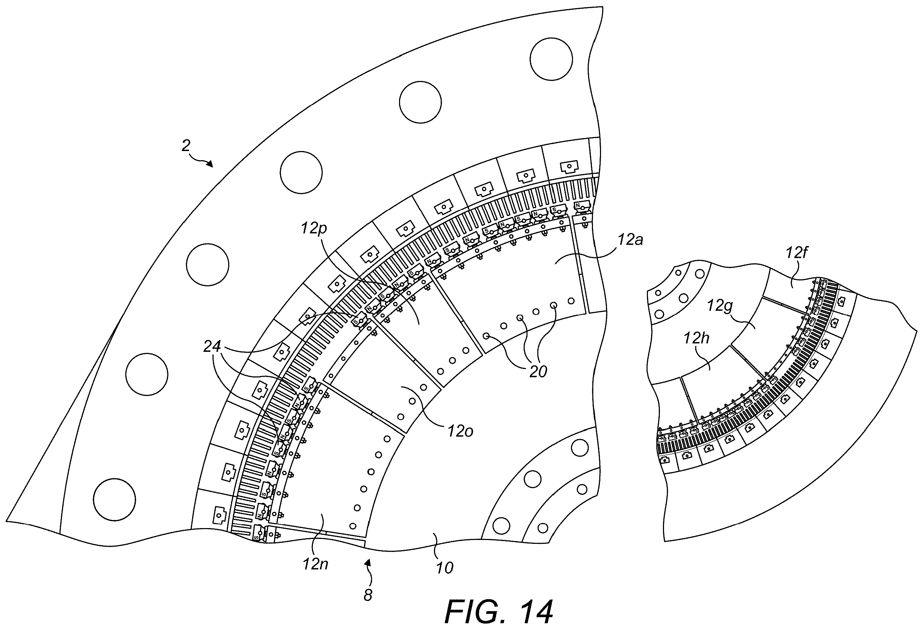

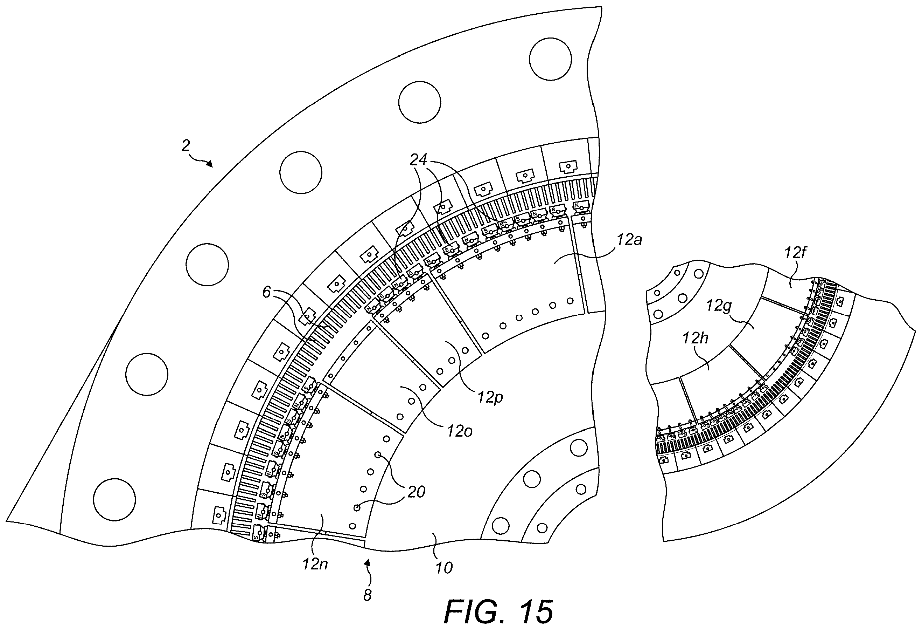

The permanent magnet modules 24 are preferably removed in a particular sequence. The first mounting block 40 and the three permanent magnet modules 24 mounted thereon can be removed from the removable rotor segment 12o, the first mounting block and the three permanent magnet modules mounted thereon can be removed from the opposite rotor segment 12g, the second mounting block and the three permanent magnet modules mounted thereon can be removed from the removable rotor segment, the second mounting block and the three permanent magnet modules mounted thereon can be removed from the opposite rotor segment, and so on. This minimises any magnet imbalance within the electrical machine. Figure 12 shows the rotor segments 12g and 12o after the first mounting blocks 40 and the first row of permanent magnet modules 24 have been removed, Figure 13 shows the rotor segments 12g and 12o after the second mounting blocks and the second row of permanent magnet modules have been removed, Figure 14 shows the rotor segments 12g and 12o after the mounting blocks and the third row of permanent magnet modules have been removed, and Figure 15 shows the rotor segments 12g and 12o after the fourth mounting block and the fourth row of permanent magnet modules have been removed.

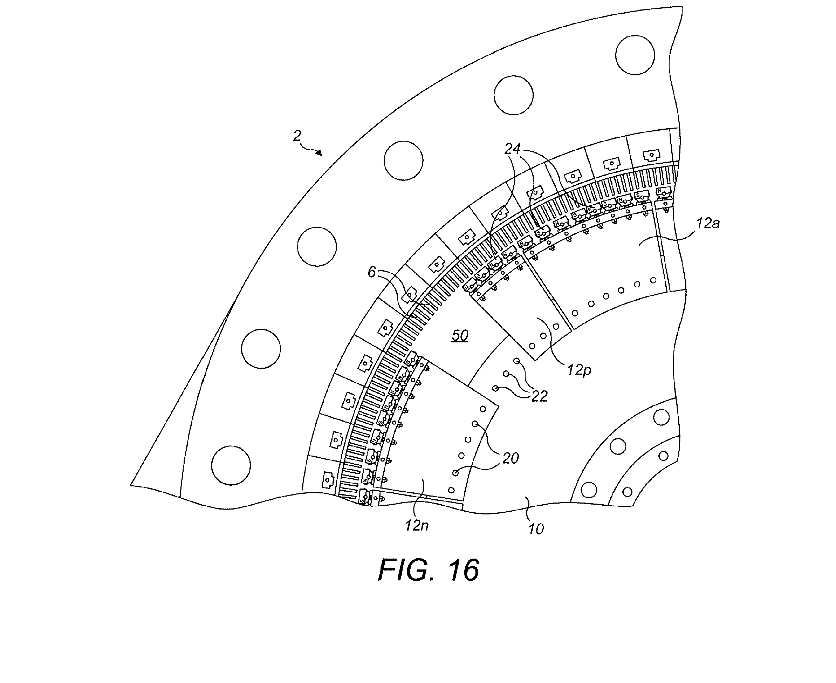

Once all of the permanent magnet modules 24 and mounting blocks 40 have also been removed from the removable rotor segment 12o, the bolts that connect the removable rotor segment to the rotor body 10 can be removed using suitable tooling. In some arrangements, it may be possible to leave the mounting blocks connected to the removable rotor segment 12o and for them to be removed together with the rotor segment after the permanent magnet modules have been removed. The removable rotor segment 12o can then be removed from the rotor body 10 to create a gap 50 (shown in Figure 16) in the radially outer surface of the rotor 8. If necessary, the rotor 8 could then also be rotated relative to the stator 2 until the gap 50 is substantially aligned with the one or more stator coils that need to be repaired or replaced. The gap 50 permits access so that the one or more stator coils can be repaired, or if necessary, the stator coils can be removed from the stator slots 6 and replacement stator coils inserted.

Once the repair or replacement is complete, the removable rotor segment 12o can be reconnected to the rotor body 10 and the permanent magnet modules 24 and mounting blocks 40 can be remounted to the removable rotor segment 12o and the opposite rotor segment 12g. The rows of permanent magnet modules 24 are preferably remounted in a particular sequence, for example, one-by-one in an anti-clockwise order.

## Claims

1. A rotor (8) for an electrical machine (1), comprising:
a rotor body (10); and
a plurality of rotor segments (12a, 12b, ..., 12p) arranged circumferentially around the rotor body (10) and connected thereto, wherein each rotor segment (12a, 12b, ..., 12p) includes a mounting surface (16) that defines part of a radially inner or outer surface of the rotor (8);
wherein each rotor segment (12a, 12b, ..., 12p) includes one or more permanent magnet modules (24) mounted to the mounting surface (16) to define an array of permanent magnet modules arranged circumferentially around the radially inner or outer surface of the rotor (8);
wherein one of the plurality of rotor segments (12o) is removably connected to the rotor body (10) and the one or more permanent magnet modules (24) that are mounted to its mounting surface (16) are removably mounted;
**characterised in that** the mounting surface (16) of the rotor segment (12o) that is removably connected to the rotor body (10) has an arc length that is less than the arc length of the mounting surface (16) of the majority of the remaining rotor segments (12a, 12b, ..., 12n); and
the rotor segment (12o) that is removably mounted to the rotor body (10) has fewer permanent magnet modules (24) mounted to its mounting surface than the majority of the remaining rotor segments (12a, 12b, ..., 12n).

2. A rotor (8) according to claim 1, wherein the mounting surface (16) of the rotor segment (12o) that is removably connected to the rotor body (10) has an arc length A, the mounting surface (16) of another one of the rotor segments (12p) has an arc length B, and the mounting surface (16) of each of the remaining rotor segments (12a, 12b, ..., 12n) has an arc length C, where arc length A plus arc length B equals arc length C.

3. A rotor (8) according to claim 2, wherein arc length A and arc length B are equal or not equal.

4. A rotor (8) according to any preceding claim, wherein the rotor segment (12o) that is removably connected to the rotor body (10) has N permanent magnet modules (24) mounted to its mounting surface (16), another one of the rotor segments (12p) has P permanent magnet modules mounted to its mounting surface (16), and the each of the remaining rotor segments ( 12a, 12b, ..., 12n) has Q permanent magnet modules mounted to its mounting surface (16), where N plus P equals Q.

5. A rotor (8) according to claim 4, wherein N and P are equal or not equal.

6. A rotor (8) according to any preceding claim, wherein each permanent magnet module (24) comprises a carrier (26) mounted to the mounting surface (16) of the respective rotor segment (12a, 12b, ..., 12p), and one or more pole pieces (28) made of permanent magnet material mounted on a surface (30) of the carrier (26).

7. A rotor (8) according to claim 6, wherein each permanent magnet module (24) further comprises an inverted U-shaped pole piece retainer (32) arranged over the one or more pole pieces (28).

8. A rotor (8) according to claim 6 or claim 7, wherein each carrier (24) is removably mounted directly to the mounting surface (16) of the respective rotor segment (12a, 12b, ..., 12p) using mechanical fixings (36).

9. A rotor (8) according to claim 6 or claim 7, wherein each carrier (26) is removably mounted to the mounting surface (16) of the respective rotor segment (12a, 12b, ..., 12p) using a mounting block (40).

10. A rotor (8) according to claim 9, wherein each mounting block (40) includes a mounting surface (46) that is positioned adjacent the mounting surface (16) of the respective rotor segment (12a, 12b, ..., 12p) and an opposite supporting surface (44) that includes a recess (48) for receiving and locating one or more respective carriers (26).

11. A rotor (8) according to claim 9 or claim 10, wherein each carrier (26) and its respective mounting block (40) are mounted to the mounting surface (16) of the respective rotor segment (12a, 12b, ..., 12p) using mechanical fixings (36).

12. An electrical machine (1) comprising a rotor (8) according to any preceding claim and a stator (2) comprising a stator winding with a plurality of stator coils arranged circumferentially around the stator.

13. A method of repairing or servicing an electrical machine (1) according to claim 12 comprising the steps of:
optionally rotating the rotor (8) relative to the stator (2) until the rotor segment (12o) that is removably connected to the rotor body (10) is substantially aligned with one or more adjacent stator coils or an access panel;
sequentially removing all of the permanent magnet modules (24) from the mounting surface (16) of the rotor segment (12o) that is removably connected to the rotor (8);
after all of the permanent magnet modules (24) are removed, removing the rotor segment (12o) from the rotor body (10) to create a gap (50) in the radially inner or outer surface of the rotor (8);
optionally rotating the rotor (8) relative to the stator (2) until the gap (50) is substantially aligned with one or more adjacent stator coils;
removing or repairing the one or more adjacent stator coils.

14. A method according to claim 13, further comprising sequentially removing at least some of the permanent magnet modules (24) from the mounting surface (16) of a rotor segment (12g) that is substantially diametrically opposite the rotor segment (12o) that is removably connected to the rotor (8).

## Patentansprüche

1. Rotor (8) für eine elektrische Maschine (1), umfassend:
einen Rotorkörper (10); und
eine Vielzahl von Rotorsegmenten (12a, 12b, ..., 12p), die in Umfangsrichtung um den Rotorkörper (10) angeordnet und mit diesem verbunden sind, wobei jedes Rotorsegment (12a, 12b, ..., 12p) eine Montageoberfläche (16) einschließt, die einen Teil einer radial inneren oder äußeren Oberfläche des Rotors (8) definiert;
wobei jedes Rotorsegment (12a, 12b, ..., 12p) ein oder mehrere Permanentmagnetmodule (24) einschließt, die an der Montageoberfläche (16) montiert sind, um ein Array von Permanentmagnetmodulen zu definieren, die in Umfangsrichtung um die radial innere oder äußere Oberfläche des Rotors (8) angeordnet sind;
wobei eines der Vielzahl von Rotorsegmenten (12o) abnehmbar mit dem Rotorkörper (10) verbunden ist und die ein oder mehreren Permanentmagnetmodule (24), die an seiner Montageoberfläche (16) montiert sind, abnehmbar montiert sind;
**dadurch gekennzeichnet, dass** die Montageoberfläche (16) des Rotorsegments (12o), das abnehmbar mit dem Rotorkörper (10) verbunden ist, eine Bogenlänge aufweist, die kleiner ist als die Bogenlänge der Montageoberfläche (16) der Mehrzahl der übrigen Rotorsegmente (12a, 12b, ..., 12n); und
das Rotorsegment (12o), das abnehmbar am Rotorkörper (10) montiert ist, weniger Permanentmagnetmodule (24) aufweist, die an seiner Oberfläche montiert sind, als die Mehrzahl der übrigen Rotorsegmente (12a, 12b, ..., 12n).

2. Rotor (8) nach Anspruch 1, wobei die Montageoberfläche (16) des Rotorsegments (12o), das abnehmbar mit dem Rotorkörper (10) verbunden ist, eine Bogenlänge A aufweist, die Montageoberfläche (16) eines anderen der Rotorsegmente (12p) eine Bogenlänge B aufweist und die Montageoberfläche (16) jedes der übrigen Rotorsegmente (12a, 12b, ..., 12n) eine Bogenlänge C aufweist, wobei Bogenlänge A plus Bogenlänge B gleich Bogenlänge C ist.

3. Rotor (8) nach Anspruch 2, wobei die Bogenlänge A und die Bogenlänge B gleich oder ungleich sind.

4. Rotor (8) nach einem vorstehenden Anspruch, wobei das Rotorsegment (12o), das abnehmbar mit dem Rotorkörper (10) verbunden ist, N Permanentmagnetmodule (24) aufweist, die an seiner Montageoberfläche (16) montiert sind, ein anderes der Rotorsegmente (12p) P Permanentmagnetmodule aufweist, die auf seiner Montageoberfläche (16) montiert sind, und jedes der übrigen Rotorsegmente (12a, 12b, ..., 12n) Q Permanentmagnetmodule aufweist, die auf seiner Montageoberfläche (16) montiert sind, wobei N plus P gleich Q ist.

5. Rotor (8) nach Anspruch 4, wobei N und P gleich oder ungleich sind.

6. Rotor (8) nach einem vorstehenden Anspruch, wobei jedes Permanentmagnetmodul (24) einen Träger (26) umfasst, der an der Montageoberfläche (16) des entsprechenden Rotorsegments (12a, 12b, ..., 12p) montiert ist, und ein oder mehrere Polstücke (28), gemacht aus Permanentmagnetmaterial, die an einer Oberfläche (30) des Trägers (26) montiert sind.

7. Rotor (8) nach Anspruch 6, wobei jedes Permanentmagnetmodul (24) weiter eine umgekehrt U-förmige Polstückhalterung (32) umfasst, die über dem einen oder den mehreren Polstücken (28) angeordnet ist.

8. Rotor (8) nach Anspruch 6 oder Anspruch 7, wobei jeder Träger (24) unter Verwendung mechanischer Fixierungen (36) direkt an der Montageoberfläche (16) des entsprechenden Rotorsegments (12a, 12b, ..., 12p) abnehmbar montiert ist.

9. Rotor (8) nach Anspruch 6 oder Anspruch 7, wobei jeder Träger (26) unter Verwendung eines Montageblocks (40) abnehmbar an der Montageoberfläche (16) des entsprechenden Rotorsegments (12a, 12b, ..., 12p) montiert ist.

10. Rotor (8) nach Anspruch 9, wobei jeder Montageblock (40) eine Montageoberfläche (46), die angrenzend an die Montageoberfläche (16) des entsprechenden Rotorsegments (12a, 12b, ..., 12p) positioniert ist, und eine gegenüberliegende Stützoberfläche (44) einschließt, die Aussparung (48) zum Aufnehmen und Lokalisieren eines oder mehrerer entsprechender Träger (26) einschließt.

11. Rotor (8) nach Anspruch 9 oder Anspruch 10, wobei jeder Träger (26) und sein entsprechender Montageblock (40) an der Montageoberfläche (16) des entsprechenden Rotorsegments (12a, 12b, ..., 12p) unter Verwendung mechanischer Fixierungen (36) montiert sind.

12. Elektrische Maschine (1), umfassend einen Rotor (8) nach einem der vorstehenden Ansprüche und einen Stator (2), der eine Statorwicklung mit einer Vielzahl von Statorspulen umfasst, die in Umfangsrichtung um den Stator angeordnet sind.

13. Verfahren zum Reparieren oder Warten einer elektrischen Maschine (1) nach Anspruch 12, umfassend die folgenden Schritte:
optionales Drehen des Rotors (8) relativ zum Stator (2), bis das Rotorsegment (12o), das abnehmbar mit dem Rotorkörper (10) verbunden ist, im Wesentlichen auf eine oder mehrere angrenzende Statorspulen oder eine Zugangsplatte ausgerichtet ist; sequentielles Entfernen aller Permanentmagnetmodule (24) von der Montageoberfläche (16) des Rotorsegments (12o), das abnehmbar mit dem Rotor (8) verbunden ist;
nachdem alle Permanentmagnetmodule (24) entfernt wurden, Entfernen des Rotorsegments (12o) vom Rotorkörper (10), um einen Spalt (50) in der radial inneren oder äußeren Oberfläche des Rotors (8) zu kreieren;
optionales Drehen des Rotors (8) relativ zum Stator (2), bis der Spalt (50) im Wesentlichen auf eine oder mehrere angrenzende Statorspulen ausgerichtet ist;
Entfernen oder Reparieren der einen oder mehreren angrenzenden Statorspulen.

14. Verfahren nach Anspruch 13, weiter umfassend sequentielles Entfernen mindestens einiger der Permanentmagnetmodule (24) von der Montageoberfläche (16) eines Rotorsegments (12g), das dem Rotorsegment (12o), das abnehmbar mit dem Rotor (8) verbunden ist, im Wesentlichen diametral gegenüberliegt.

## Revendications

1. Rotor (8) pour une machine électrique (1), comprenant :
un corps de rotor (10) ; et
une pluralité de segments de rotor (12a, 12b, ..., 12p) disposée circonférentiellement autour du corps de rotor (10) et reliée à celui-ci, dans lequel chaque segment de rotor (12a, 12b, ..., 12p) inclut une surface de montage (16) qui définit une partie d'une surface radialement intérieure ou extérieure du rotor (8) ;
dans lequel chaque segment de rotor (12a, 12b, ..., 12p) inclut un ou plusieurs modules d'aimants permanents (24) montés sur la surface de montage (16) pour définir un réseau de modules d'aimants permanents disposés circonférentiellement autour de la surface radialement intérieure ou extérieure du rotor (8) ;
dans lequel l'un de la pluralité de segments de rotor (12o) est relié de manière amovible au corps de rotor (10) et les un ou plusieurs modules d'aimants permanents (24) qui sont montés sur sa surface de montage (16) sont montés de manière amovible ;
**caractérisé en ce que** la surface de montage (16) du segment de rotor (12o) qui est relié de manière amovible au corps de rotor (10) présente une longueur d'arc qui est inférieure à la longueur d'arc de la surface de montage (16) de la majorité des segments de rotor restants (12a, 12b, ..., 12n) ; et
le segment de rotor (12o) qui est monté de manière amovible sur le corps de rotor (10) présente moins de modules d'aimants permanents (24) montés sur sa surface de montage que la majorité des segments de rotor restants (12a, 12b, ..., 12n).

2. Rotor (8) selon la revendication 1, dans lequel la surface de montage (16) du segment de rotor (12o) qui est relié de manière amovible au corps de rotor (10) présente une longueur d'arc A, la surface de montage (16) d'un autre des segments de rotor (12p) présente une longueur d'arc B, et la surface de montage (16) de chacun des segments de rotor restants (12a, 12b, ..., 12n) présente une longueur d'arc C, où la longueur d'arc A plus la longueur d'arc B est égale à la longueur d'arc C.

3. Rotor (8) selon la revendication 2, dans lequel la longueur d'arc A et la longueur d'arc B sont égales ou non égales.

4. Rotor (8) selon l'une quelconque revendication précédente, dans lequel le segment de rotor (12o) qui est relié de manière amovible au corps de rotor (10) présente N modules d'aimants permanents (24) montés sur sa surface de montage (16),
un autre des segments de rotor (12p) présente P modules d'aimants permanents montés sur sa surface de montage (16), et chacun des segments de rotor restants (12a, 12b, ..., 12n) présente Q modules d'aimants permanents montés sur sa surface de montage (16), où N plus P est égal à Q.

5. Rotor (8) selon la revendication 4, dans lequel N et P sont égaux ou non égaux.

6. Rotor (8) selon l'une quelconque revendication précédente, dans lequel chaque module d'aimant permanent (24) comprend un support (26) monté sur la surface de montage (16) du segment de rotor respectif (12a, 12b, ..., 12p), et une ou plusieurs pièces polaires (28) constituées de matériau d'aimant permanent montées sur une surface (30) du support (26).

7. Rotor (8) selon la revendication 6, dans lequel chaque module d'aimant permanent (24) comprend en outre un dispositif de retenue de pièce polaire en forme de U inversé (32) disposé sur une ou plusieurs pièces polaires (28).

8. Rotor (8) selon la revendication 6 ou la revendication 7, dans lequel chaque support (24) est monté amovible directement sur la surface de montage (16) du segment de rotor respectif (12a, 12b, ..., 12p) en utilisant des fixations mécaniques (36).

9. Rotor (8) selon la revendication 6 ou la revendication 7, dans lequel chaque support (26) est monté amovible sur la surface de montage (16) du segment de rotor respectif (12a, 12b, ..., 12p) en utilisant un bloc de montage (40).

10. Rotor (8) selon la revendication 9, dans lequel chaque bloc de montage (40) inclut une surface de montage (46) qui est positionnée à côté de la surface de montage (16) du segment de rotor respectif (12a, 12b, ..., 12p) et une surface d'appui opposée (44) qui inclut un renfoncement (48) pour recevoir et positionner un ou plusieurs supports respectifs (26).

11. Rotor (8) selon la revendication 9 ou la revendication 10, dans lequel chaque support (26) et son bloc de montage respectif (40) sont montés sur la surface de montage (16) du segment de rotor respectif (12a, 12b, ..., 12p) en utilisant des fixations mécaniques (36).

12. Machine électrique (1) comprenant un rotor (8) selon l'une quelconque revendication précédente et un stator (2) comprenant un enroulement statorique avec une pluralité de bobines de stator disposée circonférentiellement autour du stator.

13. Procédé de réparation ou d'entretien d'une machine électrique (1) selon la revendication 12, comprenant les étapes consistant à :
éventuellement, faire tourner le rotor (8) par rapport au stator (2) jusqu'à ce que le segment de rotor (12o) qui est relié de manière amovible au corps de rotor (10) soit sensiblement aligné avec une ou plusieurs bobines statoriques adjacentes ou avec un panneau d'accès ;
retirer séquentiellement tous les modules d'aimants permanents (24) de la surface de montage (16) du segment de rotor (12o) qui est relié de manière amovible au rotor (8) ;
une fois que tous les modules d'aimants permanents (24) ont été retirés, retirer le segment de rotor (12o) du corps de rotor (10) pour créer un espace (50) dans la surface radialement intérieure ou extérieure du rotor (8) ;
éventuellement, faire tourner le rotor (8) par rapport au stator (2) jusqu'à ce que l'espace (50) soit sensiblement aligné avec une ou plusieurs bobines statoriques adjacentes ;
retirer ou réparer les une ou plusieurs bobines statoriques adjacentes.

14. Procédé selon la revendication 13, comprenant en outre le retrait séquentiel d'au moins certains des modules d'aimants permanents (24) de la surface de montage (16) d'un segment de rotor (12g) qui est sensiblement diamétralement opposé au segment de rotor (12o) qui est relié de manière amovible au rotor (8).
